# EUROPÄISCHE PATENTANMELDUNG

(11) **EP 3 297 152 A1**
(43) Veröffentlichungstag der Anmeldung: **21.03.2018**
(21) Anmeldenummer: 16189226.0
(22) Anmeldetag: 16.09.2016
(51) Int. Cl.: H02P 9/30, H02P 9/14, H02P 9/04

(54) **ENERGIEVERSORGUNGSEINHEIT**

(71) Anmelder: Siemens Aktiengesellschaft, 80333 München (DE)
(72) Erfinder: Fengel, Tobias, 91154 Roth (DE); Gerdhenrichs, Ralf, 91056 Erlangen (DE); Linnartz, Vincent, 90489 Nürnberg (DE); Paduch, Stefanie, 91097 Oberreichenbach (DE); Vogt, Hartmut, 91074 Herzogenaurach (DE)

(57) **Zusammenfassung**

Die Erfindung betrifft eine Energieversorgungseinheit, aufweisend eine Verbrennungsmaschine (2) mit einer Steuereinheit (21) zur Steuerung oder Regelung der Drehzahl, eine fremderregte Synchronmaschine (3) mit einer Klemmenspannungsregelung (31) und einen Stromrichter (4) mit einer Stromrichterregelung (41), wobei die Verbrennungsmaschine (2) und die fremderregte Synchronmaschine (3) mechanisch über eine Welle (5) miteinander verbunden sind, wobei die fremderregte Synchronmaschine (3) mit elektrischen dreiphasige Anschlüsse (32) mit Wechselspannungsanschlüssen (42) des Stromrichters (4) verbunden ist, wobei Gleichspannungsanschlüsse (43) des Stromrichters (4) mit einer Last (6) verbindbar sind. Zur Verbesserung der Energieversorgungseinheit wird vorgeschlagen, mittels der Steuereinheit (21) die Drehzahl der Verbrennungsmaschine (2) in Abhängigkeit von der Wirkleistung der Last (6) steuerbar oder regelbar zu gestalten, wobei mittels der Klemmenspannungsregelung (31) der Betrag der Spannung an den elektrischen dreiphasigen Anschlüssen (32) der fremderregte Synchronmaschine (3) regelbar ist, wobei die Stromrichterregelung (41) eine Momentenregelung (410), eine Zwischenkreisspannungsregelung (411), eine Ständerflussregelung (412) und eine Erregerflussregelung (414) umfasst, wobei der Momentenregelung (410) die Zwischenkreisspannungsregelung (411) überlagert ist, wobei die Erregerflussregelung (414) deaktivierbar ist und wobei ein Integralanteil der Ständerflussregelung (412) deaktivierbar ist. Weiter betrifft die Erfindung ein Verfahren zum Regeln einer solchen Energieversorgungseinheit (1).

## Beschreibung

Die Erfindung betrifft eine Energieversorgungseinheit mit einer Verbrennungsmaschine, einer fremderregten Synchronmaschine und einem Stromrichter, wobei die Verbrennungsmaschine und die Synchronmaschine mechanisch über eine Welle miteinander verbunden sind, wobei die fremderregte Synchronmaschine mit elektrischen, dreiphasige Anschlüsse mit Wechselspannungsanschlüssen des Stromrichters verbunden ist, wobei Gleichspannungsanschlüsse des Stromrichters mit einer Last verbindbar sind. Weiter betrifft die Erfindung ein Verfahren zum Regeln einer solchen Energieversorgungseinheit.

Netzersatzgeneratoren kommen als Energieversorgungseinheit typischerweise z.B. in Notstrom-Aggregaten zum Einsatz. In dieser Anwendung werden sie mit nahezu konstanter Drehzahl betrieben. Als weiteres werden sie als Inselgeneratoren zur Energieversorgung von stationären und mobilen Arbeitsmaschinen eingesetzt. In dieser Anwendung werden sie auch mit veränderbarer Drehzahl betrieben. Als Antriebsmaschine für den Generator wird üblicherweise eine Verbrennungs-Kraftmaschine, beispielsweise ein Dieselmotor, eingesetzt.

Diesel-Generatorsätze für den allgemeinen Netzersatz, beispielsweise Notstromaggregate, werden mit konstanter Drehzahl betrieben, um eine konstante Frequenz der Generatorspannung zu gewährleisten. Diesel-Generatorsätze in Arbeitsmaschinen, beispielsweise Baggern, Kränen etc., werden als Inselgeneratoren auch mit einer last-abhängigen Drehzahl betrieben, um den Treibstoffverbrauch zu minimieren. Dem Verbrennungsmotor wird dabei von einer übergeordneten Steuerung ein lastabhängiger Drehzahlsollwert vorgegeben.

Der Generator arbeitet als Energiewandler zum Umwandeln mechanischer Energie in elektrische Energie und stellt diese Energie den elektrischen Verbrauchern zur Verfügung. Die Generatoren in solchen Konfigurationen sind typischerweise fremderregte Synchrongeneratoren. Synchrongeneratoren sind Synchronmaschinen die vorzugsweise als Generator eingesetzt werden. Beim generatorischen Betrieb wird mechanische Energie in elektrische Energie umgewandelt.

Für die Anwendung mit konstanter Drehzahl werden sie üblicherweise mit eigener Klemmenspannungsregelung (auch bekannt als AVR, Automatic Voltage Regulation) betrieben. In Anwendungen in Arbeitsmaschinen werden die Generatoren auch mit variabler Drehzahl betrieben. In diesem Fall übernimmt der Stromrichter, auch als Frequenzumrichter bezeichnet, mit seiner Regelung die Spannungsregelung an den Klemmen des Synchrongenerators.

Der Leistungsbedarf elektrischer Verbraucher, speziell der elektrischen Antriebe mobiler Arbeitsmaschinen, kann in einem weiten Bereich zwischen Leerlauf und Volllast variieren. Der Verbrennungsmotor wird in solchen Anwendungen bevorzugt mit einer lastabhängigen Drehzahl für minimalen Treibstoffverbrauch betrieben.

Ein generatorseitiger Stromrichter hat dabei die Aufgabe, als Spannungs-Frequenz-Wandler aus der drehzahlabhängig sich ändernden Spannung und Frequenz des Generators eine möglichst konstante Zwischenkreisspannung, d.h. Gleichspannung im Zwischenkreis, zu erzeugen, aus der über weitere lastseitige Stromrichter und Frequenzumrichter Verbraucher wie beispielsweise elektrischen Antriebe und weitere elektrische Verbraucher der mobilen Arbeitsmaschine versorgt werden.

Der Leistungsbedarf einer Arbeitsmaschine kann sich sehr schnell um große Werte zwischen Leerlauf und Volllast ändern. Damit ändern sich auch die Drehzahl und die Frequenz des Diesel-Generatorsatzes sowie die im System umgesetzte Leistung. Der generatorseitige Frequenzumrichter muss diesen schnellen Änderungen folgen können.

Wenn der Diesel-Generatorsatz mit konstanter Drehzahl betrieben wird und nur Drehzahlschwankungen bei Laständerungen ausgeglichen werden müssen, aber keine größeren oder schnelleren lastabhängigen Drehzahländerungen ausgeregelt werden müssen, können die elektrischen Verbraucher direkt an den Klemmen des Synchron-Generators betrieben werden, da die Netzfrequenz der Spannung an den Klemmen nahezu konstant ist und auf eine gewünschte Nennfrequenz festgelegt werden kann.

In diesem Fall kann der Generator auch mit der in solche Anwendungen üblichen eigenen Klemmenspannungsregelung (AVR = Automatic Voltage Regulation) betrieben werden. Diese regelt ohne äußere Eingriffe die Klemmenspannung des Generators und stellt zu dem Zweck dessen Erregerstrom ein.

Wenn größere oder schnellere lastabhängige Drehzahländerungen ausgeregelt werden müssen, dann wird ein Stromrichter, wie er beispielsweise für drehzahlveränderbare Antriebe verwendet wird, eingesetzt. Der Antriebsumrichter übernimmt dabei nicht nur die Versorgung von Wirk- und Blindströmen des Generators sondern auch die Klemmenspannungs- und Erregerstrom-Regelung des Generators. Der Generator wird dann ohne eigene Klemmenspannungs-Regelung betrieben, um eine Wechselwirkung zwischen der Klemmenspannungsregelung und der Stromrichterregelung auszuschließen und einen sicheren und zuverlässigen sowie fehlerfreien Betrieb zu gewährleisten.

Ein Regler, wie er beispielsweise in einer Stromrichterregelung eingesetzt ist, erzeugt ein Ausgangsignal in Abhängigkeit eines Eingangssignals. Ein I-Anteil, auch als Integralanteil bezeichnet, integriert zur Erzeugung eines Ausgangssignals das Eingangssignal. Bei dem Eingangssignal handelt es sich um die sogenannte Regelabweichung. Ein D-Anteil bildet ein Ausgangssignal, indem es die Ableitung des Eingangssignals berechnet. Ein P-Anteil, auch als Proportionalglied oder Proportionalanteil bezeichnet, multipliziert zur Bildung des Ausgangssignals das Eingangssignal mit einem Verstärkungsfaktor, oftmals als k_{P} bezeichnet. Ein Regler kann dabei einen oder mehrere diese Anteile aufweisen, die gegebenenfalls noch mit einem konstanten Faktor multipliziert werden. Wenn der Regler mehrere dieser Anteile aufweist, werden die einzelnen Ausgänge dieser Anteile zum Ausgangssignal addiert.

Der Erfindung liegt die Aufgabe zugrunde, die Energieversorgungseinheit zu verbessern.

Diese Aufgabe wird durch ein Energieversorgungseinheit, aufweisend eine Verbrennungsmaschine mit einer Steuereinheit zur Steuerung oder Regelung der Drehzahl, eine fremderregte Synchronmaschine mit einer Klemmenspannungsregelung und einen Stromrichter mit einer Stromrichterregelung gelöst, wobei die Verbrennungsmaschine und die fremderregte Synchronmaschine mechanisch über eine Welle miteinander verbunden sind, wobei die fremderregte Synchronmaschine mit elektrischen, dreiphasige Anschlüsse mit Wechselspannungsanschlüssen des Stromrichters verbunden ist, wobei Gleichspannungsanschlüsse des Stromrichters mit einer Last verbindbar sind, wobei mittels der Steuereinheit die Drehzahl der Verbrennungsmaschine in Abhängigkeit von der Wirkleistung der Last steuerbar oder regelbar ist, wobei mittels der Klemmenspannungsregelung der Betrag der Spannung an den elektrischen dreiphasigen Anschlüssen der fremderregte Synchronmaschine regelbar ist, wobei die Stromrichterregelung eine Momentenregelung, eine Zwischenkreisspannungsregelung, eine Ständerflussregelung und eine Erregerflussregelung umfasst, wobei der Momentenregelung die Zwischenkreisspannungsregelung überlagert ist, wobei die Erregerflussregelung deaktivierbar ist und wobei ein Integralanteil der Ständerflussregelung deaktivierbar ist. Weiter wird diese Aufgabe durch ein Verfahren zum Regeln einer solchen Energieversorgungseinheit gelöst, wobei die Gleichspannungsanschlüsse des Stromrichters mit der Last verbunden sind, wobei mittels der Steuereinheit die Drehzahl der Verbrennungsmaschine in Abhängigkeit von der Wirkleistung der Last geregelt oder gesteuert wird, wobei mittels der Klemmenspannungsregelung ein läuferseitiger Erregerstrom unabhängig von der Erregerflussregelung der Stromrichterregelung derart geregelt wird, dass sich an den elektrischen, dreiphasige Anschlüsse der fremderregten Synchronmaschine ein vorgebbarer Betrag der Klemmenspannung einstellt, wobei in Abhängigkeit einer vorgebbaren Gleichspannung die Energieübertragung durch den Stromrichter mittels der Zwischenkreisspannungsregelung derart geregelt wird, dass sich die vorgebbare Gleichspannung an dem Gleichspannungsanschluss einstellt, wobei die Ständerflussregelung nur mit einem Proportionalanteil den Ständerfluss in der fremderregten Synchronmaschine beeinflusst.

Weitere vorteilhafte Ausgestaltungen der Erfindung sind in den abhängigen Ansprüchen angegeben.

Der Erfindung liegt die Erkenntnis zugrunde, dass sich die Energieversorgungseinheit und insbesondere die Regelung oder die Steuerung der Energieversorgungseinheit dadurch verbessern lässt, dass die Regelung/Steuerung des Betrags der Spannung an den elektrischen, dreiphasigen Anschlüssen der fremderregten Synchronmaschine durch die Klemmenspannungsregelung der fremderregten Synchronmaschine vorgenommen wird. Dazu beeinflusst die Klemmenspannungsregelung den Erregerstrom, der im Rotor, auch als Läufer bezeichnet, einen magnetischen Fluss, den Erregerfluss, auch als Läuferfluss oder Rotorfluss bezeichnet, erzeugt. Die Zwischenkreisspannungsregelung sowie die Ständerflussregelung der fremderregten Synchronmaschine erfolgt durch die Stromrichterregelung. Dabei ist es erforderlich, dass diese Regelungen hinreichend gut voneinander entkoppelt werden. Diese Entkopplung kann dadurch erreicht werden, dass der Regler der Ständerflussregelung keinen wirksamen integrierenden Anteil, auch als Integralanteil oder I-Anteil bezeichnet, aufweist. Mit anderen Worten ist der I-Anteil, insbesondere die Wirkung des I-Anteils auf die Ständerflussregelung, deaktiviert. Durch das Deaktivieren wird ein Einfluss auf die Synchronmotor verhindert. Das Deaktivieren kann beispielsweise dadurch geschehen, dass ein Verstärkungsfaktor des I-Anteils zu null gesetzt wird oder in die Summenbildung zum Ausgangssignal des Reglers nicht berücksichtigt wird.

Eine unzulässige Beeinflussung zwischen der Klemmenspannungsregelung und der Stromrichterregelung würde dazu führen, dass unterschiedliche Regler gegeneinander arbeiten und ein stabiler Betrieb des Energieversorgungssystems nicht möglich ist.

Die Zwischenkreisspannungsregelung regelt dabei die Spannung des Zwischenkreises auf eine vorgebbare Gleichspannung. Dazu wird im Stromrichter ein Wirkstrom, oft als i_{q} oder momentbildender Strom bezeichnet, eingeprägt, der einen entsprechenden Wirkleistungsaustausch durch den Stromrichter bewirkt und die Zwischenkreisspannung verändert. Abhängig von diesem Wirkstrom erzeugt die cos-phi-Regelung einen ersten Blindstromanteil i_{d,1}. Die Erzeugung des Blindstroms durch die cos-phi-Regelung erfolgt dabei derart, dass zwischen der Spannung des Stromrichters und dem Gesamtstrom an den Klemmen der fremderregten Synchronmaschine ein Winkel ϕ (bezeichnet als Winkel phi) entsteht. Für kleine Winkel ϕ kann dabei eine Mindeststrom Einprägung vorgesehen werden, die abweichend von dem vorgegebenen Wert ϕ oder cos(ϕ) einen minimalen Blindstrom erzeugt. Dem von der cos-phi-Regelung erzeugten Blindstrom wird ein zweiter Blindstromanteil i_{d,2} überlagert. Der zweite Blindstromanteil wird durch die Ständerflussregelung erzeugt. Als Eingangsgröße erhält die Ständerflussregelung die Regelabweichung aus Sollwert und Istwert des verketteten Motorflusses ψ. Der Sollwert ist vorteilhafterweise in einer Flusskennlinie in der Stromrichterregelung hinterlegt. Die Werte des Blindstromanteils der cos-phi-Regelung und des zweiten Blindstromanteils der Ständerflussregelung werden zu einem Gesamtblindstromwert i_{d}, oder kurz zum Blindstrom i_{d}, addiert, der von der Stromrichterregelung im Stromrichter eingeprägt wird. Der Gesamtblindstrom wird oftmals als i_{d} bezeichnet. Der Gesamtstrom i_{ges} ergibt sich aus der geometrischen Summe von Wirkstrom i_{q} und Blindstrom i_{d}.

Vorteil der Erfindung ist es, einen standardisierten, ggf. serienmäßigen Netzersatz Generator mit eigener Klemmenspannungsregelung (AVR = Automatic Voltage Regulation) ohne Veränderung an einem serienmäßigen Antriebsumrichter für drehzahlveränderbare Antriebe, beispielsweise in feld-orientierter Regelung, zu betreiben.

An Stromrichtern können die angeschlossenen elektrischen Maschinen auch bei schnellen und großen Änderungen der Klemmengrößen (Frequenz, Spannung, Strom, Leistung) stabil betrieben werden. Die Klemmenspannung des Generators und damit lastabhängig dessen Erregerstrom und Polradspannung werden weiterhin von der generatoreigenen Klemmenspannungsregelung (AVR) zuverlässig geregelt.

Die Drehzahl des Diesel-Generatorsatzes wird von einer übergeordneten Steuerung entweder lastabhängig gesteuert oder geregelt oder von dieser vorgegeben und vom (elektronischen) Motorsteuergerät des Dieselmotors geregelt. Mit kleiner werdender Drehzahl wird neben der Frequenz auch die Klemmenspannung des Generators abnehmen, weil die Klemmenspannungsregelung (AVR) des Generators in dem Fall nicht mehr dessen Klemmenspannung, sondern zum Schutz der Maschine vor Übersättigung den Fluss konstant hält.

Die Klemmenspannungsregelung (AVR) des Generators und die Regelkreise für moment- und flussbildenden Strom (i_{q} und i_{d}) des generatorseitigen Antriebsumrichters dürfen sich nicht gegenseitig stören.

Der generatorseitige Antriebsumrichter wird momentgeregelt mit überlagerter Zwischenkreisspannungsregelung betrieben, um die Zwischenkreisspannung für die lastseitigen Frequenzumrichter konstant zu halten. Über diese Regelkreise wird dem Generator der momentbildende Strom eingeprägt. Um eine störende Wechselwirkung zwischen Klemmenspannungsregelung und Stromrichterregelung zu vermeiden wird die Erregerflussregelung, auch als Erregerstromregelung bezeichnet, der Stromrichterregelung deaktiviert. Somit beeinflusst die Erregerflussreglung der Stromrichterregelung nicht die Bildung des Erregerflusses, während der Ständerstrom-Flussregelkreis mit der Ständerflussregelung als Proportionalregler (nur P-Anteil, ohne Integralanteil) aktiviert bleibt. Somit weist der Regler der Ständerflussregelung nur einen P-Anteil auf. In diesem Zustand wird die Klemmenspannung des Generators (quasi-)stationär vom Klemmenspannungsregler (AVR) des Generators mit Hilfe seines Integralanteils auf den Zielwert geregelt. Bei transienten Vorgängen unterstützt der Proportionalanteil des Ständerstrom-Flussreglers dynamisch das Ausregeln von Spannungsabweichungen.

Der Polradwinkel (Lastwinkel) des klemmenspannungsgeregelten Synchrongenerators ändert sich lastabhängig. Dieser Freiheitsgrad bleibt für die generatoreigene KlemmenspannungsRegelung (AVR) erhalten. Der Stromrichter stellt den dafür jeweils benötigten Blindstrom zur Verfügung.

Die beschriebene Anordnung weist eine Reihe von Vorteilen auf. Mit ihr können standardisierte (serienmäßige) Diesel-Generatorsätze für den Betrieb mit variabler Drehzahl auch bei großen und schnellen Drehzahl- und Laständerungen, wie sie beispielsweise auf mobilen Arbeitsmaschinen im treibstoffoptimierten Betrieb vorkommen, eingesetzt werden, um die Verbraucher, insbesondere die elektrischen Antriebe, an konstanter Versorgungsspannung betreiben zu können. Die Drehzahl des Diesel-Generatorsatzes kann abhängig vom Leistungsbedarf zwischen Leerlauf-Drehzahl und Nenn- bzw. Maximal-Drehzahl ohne Rückwirkung auf die lastseitigen Verbraucher variiert werden.

Da die Drehzahl des Diesel-Generatorsatzes (im regulären Betrieb) nicht unter die Leerlauf-Drehzahl des Dieselmotors (Low Idle Speed) sinkt und heutige als generatorseitige Antriebsumrichter in Frage kommende Stromrichter in diesem Frequenzbereich die angeschlossene elektrische Synchronmaschine häufig ohne Lage-/Drehzahlistwert-Information in feld-orientierter Regelung betreiben können, kann bei geeigneter Auswahl des generatorseitigen Stromrichters der zusätzlichen Anbau eines Gebers, insbesondere eines Drehzahlgebers, am Generator entfallen.

In die Klemmenspannungs- und Erregerstromregelung des Generators muss nicht eingegriffen werden, sodass die zugesicherten Eigenschaften entsprechend der technischen Dokumentation des Generators, beispielsweise das Verhalten bei Lastaufschaltung und Lastabwurf (Unter-/Überspannung), oftmals nicht verändert werden. Standardisierte (serienmäßige) Diesel-Generatorsätze können somit unverändert verwendet werden.

Bei einer vorteilhaften Ausgestaltung der Erfindung weist die Ständerflussregelung nur einen Proportionalanteil auf, mit dem der Ständerfluss beeinflussbar ist. Dieser Proportionalanteil, auch als P-Anteil bezeichnet, ermöglicht eine schnelle Reaktion auf Änderungen der Spannung an den elektrischen, dreiphasigen Anschlüssen der fremderregten Synchronmaschine, ohne den Klemmenspannungsregler der fremderregten Synchronmaschine unzulässig zu beeinflussen. Ein entsprechender I-Anteil des Reglers ist dabei erfindungsgemäß bereits deaktiviert. Somit kann neben der Verhinderung einer unerwünschten Beeinflussung zwischen der Klemmenspannungsregelung und der Stromrichterregelung ein gutes dynamisches Verhalten beim Ausregeln von Flussschwankungen gewährleistet werden.

Bei einer weiteren vorteilhaften Ausgestaltung der Erfindung ist die Ständerflussregelung deaktivierbar. Dabei ist nicht nur der I-Anteil der Ständerflussregelung deaktiviert sondern auch alle weiteren Anteile, insbesondere der P-Anteil der Ständerflussregelung. Dies kann dadurch erreicht werden, dass alle Verstärkungsfaktoren zu null gesetzt werden. Für den P-Anteil bedeutet dies, einen Verstärkungsfaktor von k_{P}=0 in der Regelung vorzusehen. Damit trägt die Ständerflussregelung der Stromrichterregelung zwar nicht dynamisch zum Ausregeln von Spannungsabweichungen bei, jedoch sind die Regelkreise von Stromrichterregelung und Klemmenspannungsregelung noch stärker voneinander entkoppelt. Dies wirkt sich insbesondere dann positiv auf, wenn beispielsweise der ohmsche Anteil der Synchronmaschine aufgrund seiner Größe nicht vernachlässigt werden kann. Dabei wird dann nicht nur der Erregerstrom-Flussregelkreis (Erregerflussregelung) sondern auch der Ständerstrom-Flussregelkreis (Ständerflussregelung) des Antriebsumrichters deaktiviert, um die Generator-eigene Klemmenspannungs-Regelung (AVR) nicht zu stören oder unzulässig zu beeinflussen. In diesem Zustand wird die Klemmenspannung des Generators transient und (quasi-)stationär nur vom Klemmenspannungsregler (AVR) des Generators geregelt. Insbesondere für den Fall, dass sich das Verhalten der Energieversorgungseinheit nicht mit dem vereinfachten Modell von Synchronmaschine und/oder Stromrichter beschreiben lässt, kann ein stabiles Regelungsverhalten mit dieser Entkopplung zwischen Stromrichterregelung und Klemmenspannungsregelung erzielt werden. Diese Maßnahme ist insbesondere während der Inbetriebsetzung auf einfache Weise möglich, da nur einzelne Parameter in der Stromrichterregelung verändert und angepasst werden müssen.

Bei einer weiteren vorteilhaften Ausgestaltung der Erfindung weist die Energieversorgungseinheit eine cos-phi-Regelung auf und die cos-phi-Regelung regelt an den Wechselspannungsanschlüssen des Stromrichters zumindest zeitweise ein cos(ϕ)=1. Dabei wird der Blindstrom des Stromrichters in vorteilhafter Weise so geführt, dass der Generator mit annähernd cos(ϕ)=1, d. h. ohne Übererregung, betrieben wird. Dabei wird der Stromrichter bestmöglich ausgenutzt, so dass dieser entsprechend klein und kostengünstig produziert werden kann.

Im Folgenden wird die Erfindung anhand der in den Figuren dargestellten Ausführungsbeispiele näher beschrieben und erläutert. Es zeigen:
- FIG 1: eine Anordnung der Energieversorgungseinheit,
- FIG 2: eine Übersicht der Stromrichterregelung und
- FIG 3: ein Zeigerdiagramm der elektrischen Größen an der Synchronmaschine

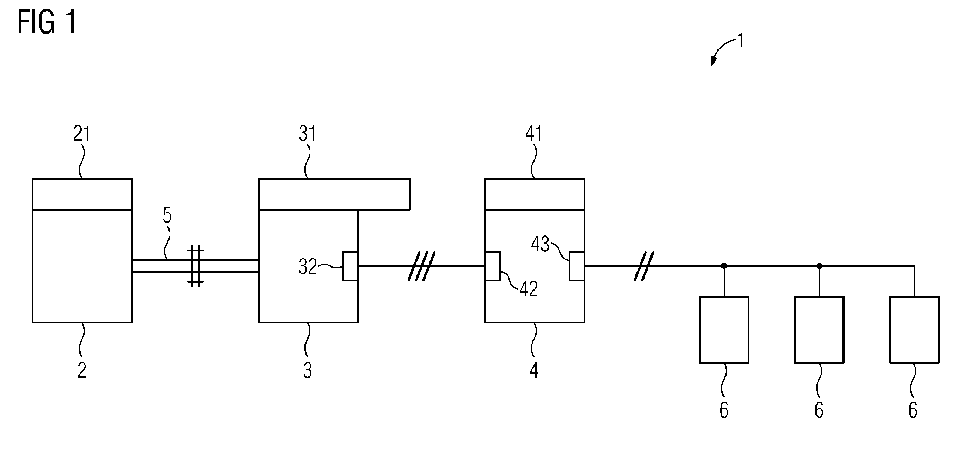

FIG 1 zeigt ein Ausführungsbeispiel einer schematischen Anordnung der Energieversorgungseinheit 1. Diese weist eine Verbrennungsmaschine 2, eine fremderregte Synchronmaschine 3, einen Stromrichter 4 sowie verschiedene Lasten 6 auf. Die Verbrennungsmaschine 2, oftmals realisiert durch einen Dieselmotor, treibt die fremderregte Synchronmaschine 3 mit einer lastabhängigen variablen Drehzahl an. Die Abhängigkeit der Drehzahl von der Last kann vorteilhafterweise so vorgegeben werden, dass sich der Treibstoffverbrauch der Verbrennungsmaschine 2 gegenüber einer konstanten Drehzahl reduziert. Die Verbrennungsmaschine 2 und die fremderregte Synchronmaschine 3 sind über eine Welle 5 mechanisch miteinander gekoppelt. Die fremderregte Synchronmaschine 3 ist mit ihren elektrischen, dreiphasigen Anschlüssen 32 mit Wechselspannungsanschlüssen 42 des Stromrichters 4 elektrisch verbunden. An die Gleichspannungsanschlüsse 43 des Stromrichters 4 sind parallel die Lasten 6 angeschlossen. Diese Lasten 6 werden in diesem Ausführungsbeispiel über eine Gleichspannung versorgt. Alternativ ist es möglich, die Gleichspannung am Gleichspannungsanschluss 43 zunächst mittels eines weiteren hier nicht dargestellten Stromrichters in eine Wechselspannung, insbesondere einer dreiphasigen Wechselspannung, umzuwandeln und anschließend mit dieser Wechselspannung die einzelnen Lasten 6 zu versorgen.

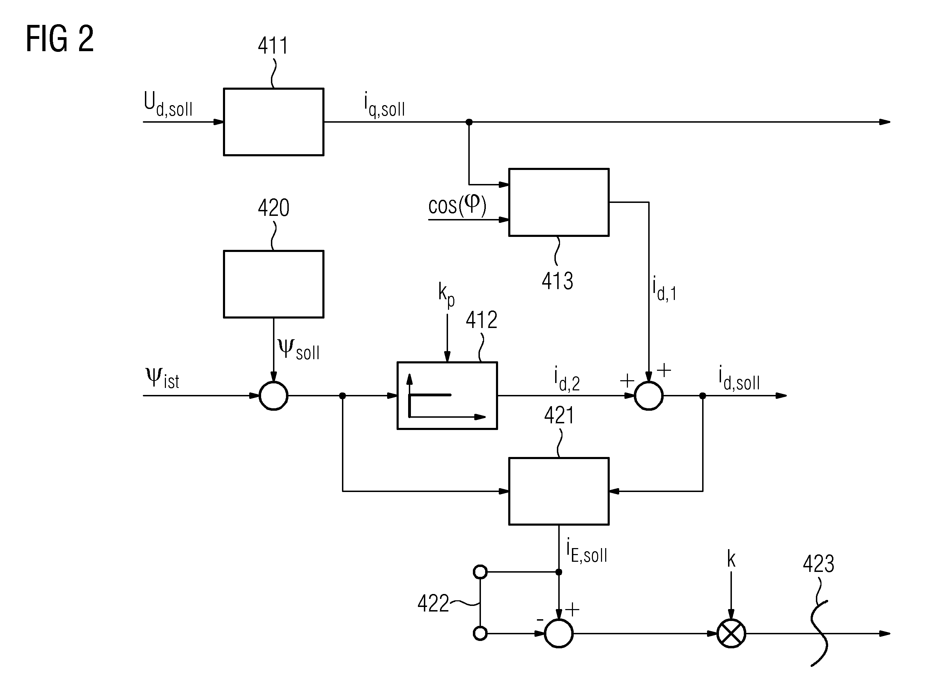

Zur Regelung der Drehzahl der Verbrennungsmaschine weist die Verbrennungsmaschine eine Steuereinheit 21 aus. Die Steuereinheit 21 erhält dazu eine hier nicht dargestellte Information bezüglich des Leistungsbedarfs der Lasten 6. Diese kann beispielsweise aus Messwertgebern (z.B. Stromwandler) oder aus einer übergeordneten Steuerebene an die Steuereinheit 21 übermittelt werden. Um die Spannung an den elektrischen dreiphasigen Anschlüssen 32 der fremderregten Synchronmaschine 3 zu regeln oder zu steuern, weist die fremderregte Synchronmaschine 3 eine Klemmenspannungsregelung 31 auf. Zur Regelung und Steuerung des Stromrichters 4 weist dieser eine Stromrichterregelung 41 auf. Die Stromrichterregelung 41 wird im Folgenden anhand der FIG 2 näher erläutert. Der Vorteil der Anordnung besteht unter anderem darin, dass die Klemmenspannungsregelung 31 und die Stromrichterregelung 41 für einen störungsfreien Betrieb keine Kommunikation (Datenaustausch) untereinander benötigen.

FIG 2 zeigt eine funktionale Übersicht der Stromrichterregelung 41. Ausgehend von einem Sollwert U_{d,soll} für die Zwischenkreisspannung U_{d} wird ein Sollwert für den Wirkstrom i_{q} durch die Zwischenkreisspannungsregelung 411 erzeugt. Der Sollwert des Wirkstroms i_{q} wird darüber hinaus der cos-phi-Regelung zugeführt. Dieser nutzt als weiteren Eingabewert einen Sollwert für den Wert cos(ϕ) um daraus einen ersten Anteil für einen Sollwert des Blindstroms i_{d,1} zu erzeugen. Der zweite Anteil des Sollwerts für den Blindstrom i_{d,2} wird von der Ständerflussregelung 412 generiert. Der Regler der Ständerflussregelung 412 weist nur einen P-Anteil, d.h. einen proportionalen Anteil, mit einem Faktor kₚ auf. Somit hat dieser Regler keinen I-Anteil und keinen D-Anteil. Der Ständerflussregelung wird als Eingangsgröße die Differenz aus Flusssollwert ψₛₒₗₗ und Flussistwert ψᵢₛₜ übergeben. Der Flusssollwert ψₛₒₗₗ ergibt sich dabei, insbesondere drehzahlabhängig, von einer hinterlegten Flussfeldkennlinie 420. Die Sollwerte von Wirkstrom i_{q} und Blindstrom i_{d} werden weiteren hier nicht dargestellten Funktionen der Stromrichterregelung 41 übergeben, die eine entsprechende Spannung an den Wechselspannungsanschlüssen 42 des Stromrichters 4 derart erzeugen, dass sich dieser bestimmte Strom mit seinem Wirkstrom- und Blindstromanteil an den Wechselspannungsanschlüssen 42 des Stromrichters 4 einstellt. Damit die Klemmenspannungsregelung 31 der fremderregten Synchronmaschine 3 störungsfrei funktionieren kann, hat die Stromrichterregelung 41 keinen Einfluss auf die Bildung des Erregerstroms i_{E}. Der Erregerstrom i_{E} bewirkt die Ausbildung des Erregerflusses in der fremderregten Synchronmaschine 3. In der Stromrichterregelung 41 vorgesehene Blöcke zur Generierung des Erregerstroms, in denen beispielsweise ein Motormodell 421 vorhanden ist, werden deaktiviert. Dies kann beispielsweise dadurch geschehen, dass an den Anschlüssen der Stromrichterregelung 41 die Soll- und Istwerte des Erregerstroms i_{E} mittels einer Brücke 422 gebrückt werden, so dass sich keine Regelabweichung ergibt und der Regler nicht aktiv wird. Damit greift er nicht in die Erregerflussbildung ein. Alternativ oder ergänzend kann auch über die Multiplikation mit einem Faktor k der Regler deaktiviert werden, indem der Faktor k zu null gewählt wird. Des Weiteren ist es alternativ oder ergänzend möglich, die Signalübertragung für den Sollwert des Erregerstromes i_{E, soll} hardwaremäßig, d.h. physisch, zu unterbrechen, indem beispielsweise der Signalpfad aufgetrennt wird. Dies ist in FIG 2 durch eine Auftrennung 423 dargestellt.

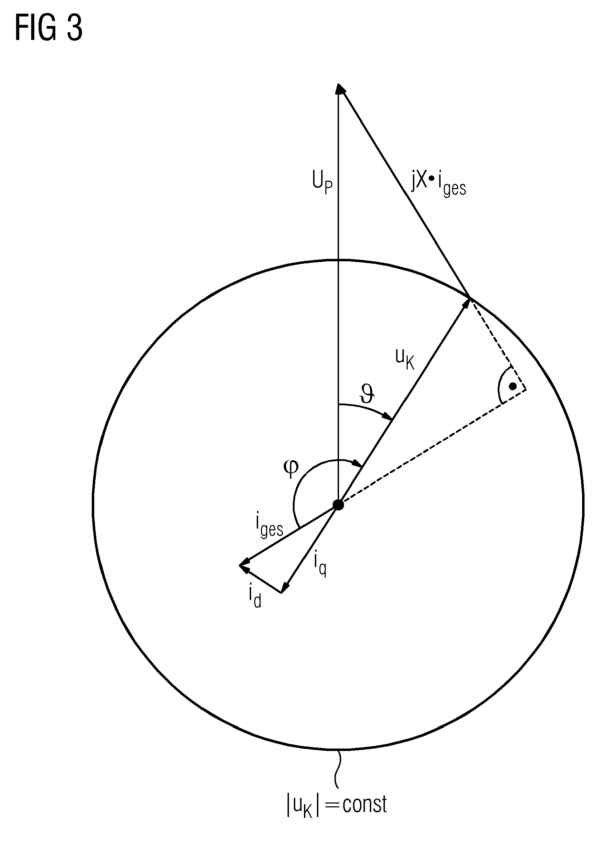

FIG 3 zeigt die elektrischen Verhältnisse an der fremderregten Synchronmaschine anhand einer Raumzeigerdarstellung. Der Kreis gibt die Punkte an, an denen die Raumzeiger der Klemmenspannung uₖ den gleichen Betrag haben. Dabei wird von der Klemmenspannungsregelung 31 die Polradspannung u_{P} so eingestellt, dass die Klemmenspannung uₖ einen Punkt auf dem Kreis erreicht und somit einem vorgebbaren Betrag entspricht. Der Winkel zwischen der Polradspannung u_{P} und der Klemmenspannung u_{K} ist der Polradwinkel ϑ. Der Winkel zwischen Gesamtstrom i_{ges} und der Klemmenspannung u_{K} wird als Winkel ϕ (phi) bezeichnet.

Die Klemmenspannungsregelung 31 der Synchronmaschine 3 hält den Betrag der Klemmenspannung u_{K} konstant (Zeigerlänge). Sie stellt damit lastabhängig den Erregerstrom i_{E} so ein, dass sich die erforderliche Polradspannung u_{P} ergibt. Der Polradwinkel ϑ stellt sich lastabhängig selbstständig ein. Dieser Freiheitsgrad sollte vorteilhafterweise auch bestehen bleiben, um das Spannungszeigerdiagramm mit den durch die Last vorgegebenen Spannungen jXₕ·i_{ges} schließen zu können. Die Stromrichterregelung 41 des Stromrichters 4 stellt die für die Wirkleistungsübertragung benötigen Wirkleistungsströme i_{q} derart ein, dass die vorgegebene Zwischenkreisspannung erreicht wird. Die cos-phi-Regelung des Stromrichters stellt in einer vorteilhaften Ausführung den für den vorgegebenen Wert cos(ϕ) erforderlichen Blindstrom ein. Der Stromrichter 4 greift mit seiner Stromrichterregelung 41 damit nicht in die Klemmenspannungsregelung 31 der Synchronmaschine 3 ein.

Alle den Erregerstrom i_{E} und damit die Polradspannung u_{P} betreffenden Funktionen und Regler der Stromrichterregelung 41 sind bei aktiver Klemmenspannungsregelung 31 der fremderregten Synchronmaschine 3 deaktiviert, weil die Erregereinrichtung des Generators von der generatoreigenen Klemmenspannungsregelung 31 (AVR) unabhängig vom Stromrichter 4, und damit auch unabhängig von der Stromrichterregelung 41, für die Synchronmaschine 3 gesteuert wird. Durch die hier dargestellte Parametrierung und/oder der Verschaltung werden die betroffenen Funktionen und Regler entsprechend für den parallelen Betrieb von Klemmenspannungsregelung 31 und Stromrichterregelung 41 angepasst. Damit ist ein Betrieb der Energieversorgungseinheit 1 mit diesen unterschiedlichen Reglern möglich, ohne dass diese sich derart beeinflussen, dass es zu Betriebsstörungen kommt. Gleichzeitig kann auf einfache Weise damit die Lastabhängige Drehzahlsteuerung/-regelung vorgenommen werden, die eine Verringerung der Kraftstoffkosten bewirkt.

Zusammenfassend betrifft die Erfindung eine Energieversorgungseinheit, aufweisend eine Verbrennungsmaschine mit einer Steuereinheit zur Steuerung oder Regelung der Drehzahl, eine fremderregte Synchronmaschine mit einer Klemmenspannungsregelung und einen Stromrichter mit einer Stromrichterregelung, wobei die Verbrennungsmaschine und die fremderregte Synchronmaschine mechanisch über eine Welle miteinander verbunden sind, wobei die fremderregte Synchronmaschine mit elektrischen dreiphasige Anschlüsse mit Wechselspannungsanschlüssen des Stromrichters verbunden ist, wobei Gleichspannungsanschlüsse des Stromrichters mit einer Last verbindbar sind. Zur Verbesserung der Energieversorgungseinheit wird vorgeschlagen, mittels der Steuereinheit die Drehzahl der Verbrennungsmaschine in Abhängigkeit von der Wirkleistung der Last steuerbar oder regelbar zu gestalten, wobei mittels der Klemmenspannungsregelung der Betrag der Spannung an den elektrischen dreiphasigen Anschlüssen der fremderregte Synchronmaschine regelbar ist, wobei die Stromrichterregelung eine Momentenregelung, eine Zwischenkreisspannungsregelung, eine Ständerflussregelung und eine Erregerflussregelung umfasst, wobei der Momentenregelung die Zwischenkreisspannungsregelung überlagert ist, wobei die Erregerflussregelung deaktivierbar ist und wobei ein Integralanteil der Ständerflussregelung deaktivierbar ist. Weiter betrifft die Erfindung ein Verfahren zum Regeln einer solchen Energieversorgungseinheit.

## Patentansprüche

1. Energieversorgungseinheit (1), aufweisend
- eine Verbrennungsmaschine (2) mit einer Steuereinheit (21) zur Steuerung oder Regelung der Drehzahl
- eine fremderregte Synchronmaschine (3) mit einer Klemmenspannungsregelung (31)
- einen Stromrichter (4) mit einer Stromrichterregelung (41), wobei die Verbrennungsmaschine (2) und die fremderregte Synchronmaschine (3) mechanisch über eine Welle (5) miteinander verbunden sind,
wobei die fremderregte Synchronmaschine (3) mit elektrischen, dreiphasige Anschlüsse (32) mit Wechselspannungsanschlüssen (42) des Stromrichters (4) verbunden ist,
wobei Gleichspannungsanschlüsse (43) des Stromrichters (4) mit einer Last (6) verbindbar sind,
wobei mittels der Steuereinheit (21) die Drehzahl der Verbrennungsmaschine (2) in Abhängigkeit von der Wirkleistung der Last (6) steuerbar oder regelbar ist,
wobei mittels der Klemmenspannungsregelung (31) der Betrag der Spannung an den elektrischen dreiphasigen Anschlüssen (32) der fremderregte Synchronmaschine (3) regelbar ist,
wobei die Stromrichterregelung (41) eine Momentenregelung (410), eine Zwischenkreisspannungsregelung (411), eine Ständerflussregelung (412) und eine Erregerflussregelung (414) umfasst, wobei der Momentenregelung (410) die Zwischenkreisspannungsregelung (411) überlagert ist, wobei die Erregerflussregelung (414) deaktivierbar ist und wobei ein Integralanteil der Ständerflussregelung (412) deaktivierbar ist.

2. Energieversorgungseinheit (1) nach Anspruch 1, wobei die Ständerflussregelung (412) nur einen Proportionalanteil aufweist, mit dem der Ständerfluss beeinflussbar ist.

3. Energieversorgungseinheit (1) nach einem der Ansprüche 1 oder 2, wobei die Ständerflussregelung (412) deaktivierbar ist.

4. Verfahren zum Regeln einer Energieversorgungseinheit (1) nach einem der Ansprüche 1 bis 3, wobei die Gleichspannungsanschlüsse des Stromrichters (4) mit der Last (6) verbunden sind, wobei mittels der Steuereinheit (21) die Drehzahl der Verbrennungsmaschine (2) in Abhängigkeit von der Wirkleistung der Last (6) geregelt oder gesteuert wird,
wobei mittels der Klemmenspannungsregelung (31) ein läuferseitiger Erregerstrom unabhängig von der Erregerflussregelung (414) der Stromrichterregelung (41) derart geregelt wird, dass sich an den elektrischen, dreiphasige Anschlüsse (32) der fremderregten Synchronmaschine (3) ein vorgebbarer Betrag der Klemmenspannung einstellt,
wobei in Abhängigkeit einer vorgebbaren Gleichspannung die Energieübertragung durch den Stromrichter (4) mittels der Zwischenkreisspannungsregelung (411) derart geregelt wird, dass sich die vorgebbare Gleichspannung an dem Gleichspannungsanschluss (43) einstellt, wobei die Ständerflussregelung (412) nur mit einem Proportionalanteil den Ständerfluss in der fremderregten Synchronmaschine (3) beeinflusst.

5. Verfahren zum Regeln nach Anspruch 4, wobei die Ständerflussregelung (412) deaktiviert ist.

6. Verfahren zum Regeln nach einem der Ansprüche 4 oder 5, wobei die Energieversorgungseinheit (1) eine cos-phi-Regelung (413) aufweist und die cos-phi-Regelung (413) an den Wechselspannungsanschlüssen (42) des Stromrichters (4) zumindest zeitweise ein cos(ϕ)=1 regelt.
